# EUROPÄISCHE PATENTSCHRIFT

(11) **EP 3 394 568 B1**
(45) Veröffentlichungstag und Bekanntmachung des Hinweises auf die Patenterteilung: **28.04.2021**
(21) Anmeldenummer: 16816286.5
(22) Anmeldetag: 20.12.2016
(51) Int. Cl.: G01C 21/34, G01C 21/36, G06Q 10/04, G06Q 50/30, G08G 1/00, G06Q 10/02, G06Q 50/00

(54) **VERFAHREN UND SYSTEM ZUM KOOPERATIVEN ERZEUGEN UND VERWALTEN EINES REISEPLANS**
METHOD AND SYSTEM FOR COOPERATIVELY GENERATING AND MANAGING A TRAVEL PLAN
PROCÉDÉ ET SYSTÈME POUR LA GÉNÉRATION ET LA GESTION COOPÉRATIVE D'UN PLAN DE VOYAGE

(30) Priorität: 22.12.2015 DE 102015122598
(43) Veröffentlichungstag der Anmeldung: 31.10.2018
(73) Patentinhaber: Volkswagen Aktiengesellschaft, 38440 Wolfsburg (DE)
(72) Erfinder: KASSNER, Astrid, 10117 Berlin (DE)
(74) Vertreter: Reitstötter Kinzebach
(86) Internationale Anmeldenummer: PCT/EP2016/082026
(87) Internationale Veröffentlichungsnummer: WO 2017/108858

(56) Entgegenhaltungen:
- DE-A1-102010 061 860
- US-A1- 2009 276 154
- US-A1- 2011 144 898
- US-A1- 2013 096 819
- US-A1- 2014 129 143
- Saikat Basu: "Plan an American Road Trip the Right Way with Roadtrippers", , 27. Juni 2012 (2012-06-27), XP055272189, Gefunden im Internet: URL:http://www.guidingtech.com/12507/plan- american-road-trip-right-way-roadtrippers/ [gefunden am 2016-05-12]

## Beschreibung

Die vorliegende Erfindung betrifft ein Verfahren zum kooperativen Erzeugen und Verwalten eines Reiseplans für ein Fahrzeug durch zumindest zwei Nutzergeräte. Sie betrifft ferner ein System zum kooperativen Erzeugen und Verwalten eines Reiseplans, wobei das System ein Fahrzeug und zumindest zwei Nutzergeräte umfasst.

Moderne Fahrzeuge, insbesondere Kraftfahrzeuge, sehen eine Vielzahl von Möglichkeiten vor, eine Reise mittels elektronischer Einrichtungen zu gestalten. Beispielsweise können Navigationsgeräte genutzt werden, um eine Planung für die zu fahrende Route zu erzeugen. Fahrerassistenzsysteme können die Steuerung des Fahrzeugs teilweise oder weitgehend übernehmen bis hin zur vollautomatischen Steuerung des Fahrzeugs und seiner Einrichtungen während der Reise.

Aus der EP 1 300 817 B1 ist ein Navigationsdaten-Bereitstellungssystem bekannt. Bei diesem System werden Fahrtroutendaten ausgesandt, die in Abhängigkeit von Nutzerpräferenzdaten ausgewählt werden. Die Fahrtroutendaten werden von einem Navigationsendgerät empfangen und zur Streckenführung für das Fahrzeug verwendet.

Es werden daher wachsende Ansprüche an die erlebnisorientierte Gestaltung der Reise gestellt, insbesondere wenn mehrere Personen an der Reise beteiligt sind.

Zudem ist aus der DE 10 2015 201 053 A1 ein System bekannt, bei dem nach einer Fahrt mit einem Fahrzeug ein Video hergestellt wird. Dabei wird detektiert, an welchen GPS-Koordinaten der Fahrer den Blick von der Fahrtrichtung weg und einem potentiell interessanten Ort zuwendet. Anhand der GPS-Koordinaten werden aus einer Datenbank Bilder ausgewählt und zu einem Video verarbeitet.

Ferner ist es bekannt, eine Abspielliste für Musiktitel auf einer Online-Plattform zu speichern und weiteren Nutzern das Verändern der Abspielliste zu erlauben.

Die US 2011/0144898 A1 beschreibt ein Verfahren zur Erzeugung einer Fahrtroute mit Zwischenzielen, die hinzugefügt oder entfernt werden können und deren Reihenfolge automatisch verändert werden kann, um die Fahrt zu optimieren. Zwischenziele können über ein soziales Netzwerk geteilt werden, sodass verschiedene Fahrer ihre Routen koordinieren können.

Die US 2014/0129143 A1 beschreibt ein Verfahren, bei dem ein erstes Gerät Informationen über eine Route von einem zweiten Gerät empfängt und eine Navigation entlang dieser Route durchführt. Dabei gibt das zweite Gerät die Route vor, während das erste Gerät ihr lediglich folgt. Änderungen der Route können vom zweiten an das erste Gerät gesendet und von diesem berücksichtigt werden, so dass die gleiche Routenführung für beide Geräte bereitgestellt wird.

Der vorliegenden Erfindung liegt die Aufgabe zugrunde, ein Verfahren und ein System der eingangs genannten Art bereitzustellen, die eine gemeinschaftliche und benutzerfreundliche Gestaltung einer Reise ermöglichen.

Erfindungsgemäß wird diese Aufgabe durch ein Verfahren mit den Merkmalen des Anspruchs 1 und ein System mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren der eingangs genannten Art wird in einem Schritt (a) durch ein erstes der zumindest zwei Nutzergeräte eine Startposition und eine Zielposition erfasst und der Reiseplan erzeugt, wobei der Reiseplan zumindest eine Fahrtroute von der Startposition zur Zielposition sowie eine Liste von Planungsobjekten umfasst, die der Fahrtroute zugeordnet sind. In einem Schritt (b) wird für alle weiteren der zumindest zwei Nutzergeräte eine Teilnahmeanfrage erzeugt und an das jeweilige weitere Nutzergerät übertragen. Dabei wird die Teilnahmeanfrage durch das jeweilige weitere Nutzergerät ausgegeben und eine Nutzereingabe als Annahme erfasst, wobei das erste Nutzergerät und die weiteren Nutzergeräte, für die eine Annahme erfasst wurde, Teilnehmergeräte sind. In einem Schritt (c) wird nun durch ein Teilnehmergerät eine Anzeige anhand des Reiseplans erzeugt und ausgegeben. Dabei umfasst die Anzeige eine Bedienoberfläche. Mittels einer Eingabeeinheit des Teilnehmergeräts werden Reiseplanergänzungsdaten erfasst, wobei der Fahrtroute zumindest ein weiteres Planungsobjekt zugeordnet wird oder ein der Fahrtroute zugeordnetes Planungsobjekt entfernt wird. Es folgt ein Schritt (d), bei dem der vorherige Schritt (c) solange wiederholt wird, wie weitere Reiseplanergänzungsdaten erfasst werden und bis zum Veröffentlichen eines Vorschlags durch den Nutzer. Dabei werden die erfassten Reiseplanergänzungsdaten aktualisiert. In einem Schritt (e) wird anschließend der Reiseplan anhand der erfassten Reiseplanergänzungsdaten aktualisiert, wobei die Fahrtroute und/oder die Liste der Planungsobjekte neu erzeugt werden. In einem Schritt (f) wird anhand des aktualisierten Reiseplans ein Steuersignal erzeugt und zumindest an eine Navigationseinrichtung des Fahrzeugs übertragen. Schließlich werden in einem Schritt (g) mit dem aktualisierten Reiseplan die Schritte (c) bis (f) wiederholt, solange in Schritt (c) und (d) weitere Reiseplanergänzungsdaten erfasst werden.

Durch das erfindungsgemäße Verfahren kann der Reiseplan vorteilhafterweise kooperativ durch mehrere Nutzer bearbeitet und gestaltet werden. Diese Planung der Reise durch den Reiseplan kann sowohl vor als auch während der Reise erfolgen und/oder fortgesetzt werden.

Der Begriff "Reise" ist im erfindungsgemäßen Sinne als die Gesamtheit einer Fahrt mit einem Fahrzeug, der Fahrt zugeordneter Ereignisse und geografischer Informationen sowie persönlicher Daten von an der Fahrt beteiligten Personen definiert. Entsprechend bezeichnet der Begriff "Reiseplan" gemäß der Erfindung eine Gesamtheit von Daten, welche eine Reise betreffen. Dabei kann der Reiseplan eine in der Zukunft liegenden Reise betreffen, wobei er in diesem Fall zur Planung einer bevorstehenden Reise genutzt werden kann, er kann aber auch eine vergangene Reise betreffen, etwa im Sinne eines Protokolls oder einer Aufzeichnung der Reise.

Dabei umfasst der Reiseplan geografische Informationen, die der Reise zugeordnet sind, insbesondere den Verlauf einer Fahrtroute, sowie Planungsobjekte. Als "Planungsobjekte" des Reiseplans werden datentechnische Einheiten bezeichnet, die für den Ablauf des Reiseplans funktionell zusammengehörige Einheiten bilden. Planungsobjekte können beispielsweise geografische Daten sein, insbesondere eine Start- und Zielposition der Reise. Planungsobjekte können ferner weitere geografische Ziele, etwa Zwischenziele oder Sonderziele bzw. *Points of Interest* (POIs) umfassen. Sie können ferner Multimediainhalte oder Verknüpfungen zu Multimediainhalten umfassen.

Erfindungsgemäß umfasst der Reiseplan eine Liste von Planungsobjekten, wobei diese der Fahrtroute zugeordnet sind. Die Zuordnung kann insbesondere zeitlich und/oder räumlich erfolgen. Beispielsweise kann ein Planungsobjekt eine geografische Information umfassen und ein Punkt auf einer geplanten Fahrtroute der Reise repräsentieren. Ferner können Planungsobjekte einen bestimmten Zeitpunkt der Reise betreffen.

Das erfindungsgemäße Verfahren sieht vor, dass der Reiseplan kooperativ erzeugt und verwaltet wird, wobei zumindest zwei Nutzergeräte verwendet werden. Die Nutzergeräte können beispielsweise Mobilgeräte eines Nutzers sein, die Nutzergeräte können allerdings auch Einrichtungen des Fahrzeugs umfassen, beispielsweise einen Touchscreen des Fahrzeugs, der als Mitteldisplays am Armaturenbrett des Fahrzeugs angeordnet ist und als Ein- und Ausgabeeinheit genutzt wird. Der Reiseplan kann also durch mehrere Nutzer und mittels mehrerer Nutzergeräte beeinflusst werden.

In dem ersten Schritt des Verfahrens wird eine Initialisierung durchgeführt, wobei der Reiseplan erzeugt wird. Dazu sind als minimale Angaben die Start- und Zielposition einer Fahrtroute der Reise vorgesehen. Ferner wird dabei eine Liste von Planungsobjekten erzeugt, wobei diese Liste zumindest die Start- und Zielposition als geografische Planungsobjekte umfasst.

In einem weiteren Schritt werden weitere Nutzergeräte als Teilnehmergeräte definiert. Dabei wird eine Teilnahmeanfrage an die anderen Nutzergeräte übertragen und bei einer Annahme durch eine Nutzereingabe wird das jeweilige Nutzergerät als weiteres Teilnehmergerät registriert.

In einem weiteren Schritt erhalten die Nutzer durch die Teilnehmergeräte die Möglichkeit, den Reiseplan auszugeben und zu bearbeiten. Dies erfolgt insbesondere mittels einer kombinierten Aus- und Eingabeeinheit, etwa einen Touchscreen. Die Bedienung kann allerdings auch anhand weiterer an sich bekannter Verfahren erfolgen, beispielsweise mittels eines Dreh-Drück-Stellers oder einer Maus. Der Reiseplan kann insbesondere verändert werden, indem Planungsobjekte zu der Liste der Planungsobjekte hinzugefügt werden oder Planungsobjekte aus der Liste entfernt werden. Insbesondere kann dabei auch eine Modifikation der Planungsobjekte und/oder der Zuordnung der Planungsobjekte zu der Fahrtroute erfolgen, wobei dies insbesondere als aufeinanderfolgendes Entfernen und neu Hinzufügen eines Planungsobjekts realisiert werden kann. Die durch ein Teilnehmergerät vorgenommenen Modifikationen werden als Reiseplanergänzungsdaten erfasst. Die Erfassung der Reiseplanergänzungsdaten wird insbesondere so lange fortgesetzt, wie neue Eingaben erfasst werden. Beispielsweise können dadurch viele Änderungen des Reiseplans zusammengefasst werden.

In einem weiteren Schritt wird der Reiseplan anhand der erfassten Reiseplanergänzungsdaten aktualisiert, wobei die Fahrtroute und/oder die Liste der Planungsobjekte neu erzeugt werden. Schließlich wird anhand des Reiseplans ein Steuersignal für eine Navigationseinrichtung des Fahrzeugs erzeugt und übertragen, sodass insbesondere eine Navigation entlang der Fahrtroute durchgeführt werden kann.

Die Schritte der Erfassung von Reiseplanergänzungsdaten und Aktualisierung des Reiseplans können wiederholt werden, so lange Änderungen eingegeben werden.

Insbesondere kann auch der Schritt des Übertragens einer Teilnahmeanfrage wiederholt werden, wobei weitere Teilnehmergeräte hinzugefügt werden können. Ferner können Teilnehmergeräte absagen und damit aus der Reihe der Teilnehmergeräte entfernt werden oder es können weitere Nutzergeräte eingeladen werden und zu Teilnehmergeräten werden.

Bei einer weiteren Ausbildung umfassen die Reiseplanergänzungsdaten Planungsobjekte mit geographischen Zielen, wobei beim Aktualisieren des Reiseplans anhand der Reiseplanergänzungsdaten die geographischen Ziele als Zwischenziele auf der Fahrtroute hinzugefügt werden. Dadurch können vorteilhafterweise geographische Zwischenziele der Fahrtroute hinzugefügt werden.

Es ist auf diese Weise durch die Erfindung möglich, ein kooperatives Beeinflussen der Fahrtroute durch alle Fahrzeuginsassen zu ermöglichen. Verschiedene Teilnehmergeräte können genutzt werden, um Navigationswünsche einzubringen und in den Reiseplan zu übernehmen. So kann beispielsweise ein Restaurant als Zwischenziel der Fahrtroute hinzugefügt werden.

Erfindungsgemäß wird ein bestimmtes Teilnehmergerät als Fahrergerät betrieben und die anderen Teilnehmergeräte werden als Mitfahrergeräte betrieben. Anhand der Reiseplanergänzungsdaten wird eine Bestätigungsanfrage erzeugt und durch das Fahrergerät ausgegeben. Durch das Fahrergerät wird eine Annahme der Bestätigungsanfrage erfasst wird und in Schritt (e) wird der Reiseplan in Abhängigkeit von der erfassten Annahme aktualisiert.

Dadurch kann vorteilhafterweise sichergestellt werden, dass der Fahrer beziehungsweise der Nutzer des Fahrergeräts die Kontrolle über den Reiseplan hat. Dabei kann vorgesehen sein, dass durch das Fahrergerät einzelne oder mehrere Planungsobjekte beziehungsweise Modifikationen des Reiseplans durch die Reiseplanergänzungsdaten überprüft werden können. Es kann insbesondere vorgesehen sein, dass die Bestätigungsanfrage für bestimmte Arten von Reiseplanergänzungsdaten erzeugt wird, insbesondere beim Hinzufügen und/oder Verändern eines bestimmten Typs von Planungsobjekten.

Bei einer Ausbildung wird die Bestätigungsanfrage erzeugt, wenn die Reiseplanergänzungsdaten Planungsobjekte mit geographischen Zielen umfassen. Der Nutzer des Fahrergeräts behält auf diese Weise die Kontrolle über den Verlauf der Fahrtroute und das Einfügen, Entfernen und/oder Verändern von Zwischenzielen. Beispielsweise können Nutzer von Mitfahrgeräten ein Zwischenziel vorschlagen, wobei die Annahme von dem Nutzer des Fahrergeräts abhängt. Insbesondere kann die Bestätigungsanfrage Informationen enthalten, die dem Nutzer des Fahrgeräts die Bewertung der Reiseplanergänzungsdaten erleichtern, beispielsweise eine Fahrzeit, eine Veränderung der Fahrzeit durch die Annahme der Bestätigungsanfrage, eine Abstandsangabe und/oder weitere Informationen zu Planungsobjekten der Reiseplanergänzungsdaten.

Bei einer weiteren Ausbildung wird, wenn die Reiseplanergänzungsdaten mehrere Planungsobjekte mit geographischen Zielen umfassen, für alle geographischen Zielen jeweils eine Bestätigungsanfrage erzeugt.

Auf diese Weise können Vorschläge zur Änderung des Fahrtroutenverlaufs durch Einfügen, Entfernen und/oder Verändern von Zwischenzielen einzeln bewertet und gegebenenfalls angenommen werden. Ferner kann durch eine Bestätigungsanfrage für mehrere oder alle geografischen Ziele der Reiseplanergänzungsdaten eine kombinierte Annahme oder Ablehnung ermöglicht werden.

Bei einer Weiterbildung umfassen die Planungsobjekte Verknüpfungen zu Multimediainhalten. Dadurch können die Multimediainhalte in den Reiseplan integriert werden. Multimediainhalte können beispielsweise Bilder, Videos, Audiodaten und/oder Text umfassen. Insbesondere werden die Multimediainhalte durch Verknüpfungen repräsentiert, der Reiseplan umfasst also nicht die Daten selbst, sondern Informationen darüber, wie auf die Multimediainhalte, insbesondere in digitaler Form, zugegriffen werden kann.

Die Multimediainhalte werden durch den Reiseplan mit der Fahrtroute räumlich und/oder zeitlich verknüpft. Beispielsweise kann die Wiedergabe eines Multimediainhalts an einem bestimmten Ort der Fahrtroute oder zu einer bestimmten Zeit der Reise vorgesehen sein. Die Wiedergabe kann dabei insbesondere durch Einrichtungen des Fahrzeugs erfolgen, beispielsweise durch einen Bildschirm im Fond des Fahrzeugs, der für die Fahrzeuginsassen im Fond einsehbar ist. Die Wiedergabe kann ferner durch andere gemeinsame Einrichtungen zur Medienwiedergabe für die Passagiere des Fahrzeugs erfolgen. Ferner kann die Wiedergabe durch Nutzergeräte, insbesondere durch die Teilnehmergeräte erfolgen. Insbesondere kann dabei der Reiseplan teilnehmerspezifisch gebildet werden, beispielsweise in dem die Wiedergabe eines Multimediainhalts für einen bestimmten Teilnehmer vorgesehen ist.

Ferner kann, wenn die Liste von Planungsobjekten des Reiseplans Verknüpfungen zu Multimediainhalten umfasst, eine Abspielliste der Multimediainhalte für eine Medienwiedergabeeinrichtung des Fahrzeugs erzeugt werden. Die Abspielliste umfasst insbesondere Informationen, die zur Wiedergabe der Multimediainhalte notwendig sind, sowie Informationen zu den jeweiligen Zeitpunkten der Wiedergabe einzelner Multimediainhalte. Beispielsweise kann ein Zeitpunkt oder ein bestimmtes Ereignis, beispielsweise das Erreichen eines bestimmten Orts entlang der Fahrtroute als Bedingung für die Wiedergabe eines Multimediainhalts definiert werden. Ferner kann die Abspielliste eine geordnete Abfolge von Multimediainhalten umfassen, wobei die Wiedergabe entsprechend der Reihenfolge der Multimediainhalte der geordneten Liste entspricht.

Bei einer weiteren Ausbildung wird die Abspielliste so erzeugt, dass die Multimediainhalte der Abspielliste aufeinander folgend wiedergegeben werden oder bestimmten Zeiten oder Orten der Fahrtroute zugeordnet werden.

Dabei kann die Abspielliste so erzeugt werden, dass die Multimediainhalte der Abspielliste aufeinanderfolgend wiedergegeben werden oder bestimmten Zeiten oder Orten der Fahrtroute zugeordnet werden. Insbesondere kann die Abspielliste verändert werden, indem ein Planungsobjekt mit einem Multimediainhalt beziehungsweise einer Verknüpfung zu einem Multimediainhalt entfernt wird, indem ein solches Planungsobjekt an das Ende der Abspielliste angehängt wird oder indem das Planungsobjekt der Fahrtroute zeitlich oder räumlich zugeordnet wird. Dabei wird die Wiedergabe der Abspielliste mit den Multimediainhalten so durchgeführt, dass eine durch die Abspielliste definierte Reihenfolge berücksichtigt wird beziehungsweise eine Wiedergabe entsprechend der jeweiligen Zuordnung der Planungsobjekte zur Fahrtroute erfolgt.

Bei einer Weiterbildung ist jeder Multimediainhalt einem Teilnehmergerät zugeordnet und die Verknüpfung zu dem Multimediainhalt umfasst Informationen über das zugeordnete Teilnehmergerät und/oder über einen Speicherort des Multimediainhalts.

Dabei ist insbesondere jeder Multimediainhalt einem Teilnehmergerät zugeordnet, und die Verknüpfung zu dem Multimediainhalt umfasst Informationen über das zugeordnete Teilnehmergerät und/oder über einen Speicherort des Multimediainhalts. Dadurch kann vorteilhafterweise eine Verwaltung von Zugriffsrechten für Multimediainhalte implementiert werden. Beispielsweise können Multimediainhalte auf einzelnen Teilnehmergeräten gespeichert sein oder es kann ein Zugriff auf die Multimediainhalte durch die einzelnen Teilnehmergeräte erfolgen. Umfasst die Liste der Planungsobjekte Verknüpfungen zu Multimediainhalten, so umfassen die jeweiligen Planungsobjekte Informationen darüber, wie auf die Multimediainhalte zugegriffen werden kann. Dies kann insbesondere durch die Angabe eines Speicherorts erfolgen, von dem aus beispielsweise ein Streaming oder anderes Wiedergeben des Multimediainhalts möglich ist.

Insbesondere können verschiedene Betriebsmodi für die Nutzergeräte definiert sind. Dies kann beispielsweise ein öffentlicher und ein privater Betriebsmodus sein. Dabei kann der private Betriebsmodus so definiert sein, dass kein Zugriff auf Inhalte des jeweiligen Mobilgeräts zugelassen werden. In diesem Fall ist beispielsweise kein Abspielen von Multimediainhalten des Nutzergeräts durch eine Einrichtung des Fahrzeugs oder durch andere Nutzergeräte möglich. Ferner kann durch den privaten Betriebsmodus sichergestellt werden, dass andere Nutzergeräte die Multimediainhalte und/oder weitere Daten des Mobilgeräts nicht einsehen und/oder verwenden können. Umgekehrt kann der öffentliche Betriebsmodus so definiert sein, dass andere Teilnehmergeräte die Multimediainhalte des Nutzergeräts im öffentlichen Betriebsmodus einsehen und/oder verwenden können. Wechselt ein Teilnehmergerät in dem dargestellten Beispiel in den privaten Betriebsmodus, so können Verknüpfungen zu Multimediainhalten, die diesem Teilnehmergerät zugeordnet sind, nicht für die Wiedergabe der Abspielliste verwendet werden.

Bei einer Ausbildung umfasst die Bedienoberfläche eine Darstellung der Fahrtroute. Dies ermöglicht vorteilhafterweise eine Anzeige der geplanten Fahrtroute, wobei insbesondere Nutzereingaben zur Erzeugung von Reiseplanergänzungsdaten durch Nutzer der Teilnehmergeräte an die geplante Fahrtroute angepasst werden können.

Bei einer weiteren Ausbildung umfasst die Darstellung der Fahrtroute eine Kartendarstellung oder ein graphisches Symbol.

Insbesondere kann die Darstellung der Fahrtroute als Kartendarstellung oder als grafisches Symbol erfolgen. Dabei ermöglicht die Kartendarstellung eine detaillierte Anzeige der Fahrtroute, während durch ein grafisches Symbol die Fahrtroute durch ein einfach und schnell erfassbares Element dargestellt werden kann. Die Darstellung als grafisches Symbol, beispielsweise als geometrische Form, die der Fahrtroute zugeordnet ist, oder durch eine lineare Abfolge von grafischen Symbolen, kann eine besonders einfache Anzeige erreicht werden, wenn der detaillierte Verlauf der Fahrtroute nicht relevant ist.

Bei einer Weiterbildung umfasst die Bedienoberfläche Bedienelemente, wobei jedem Bedienelement ein Planungsobjekt zugeordnet ist. Ferner sind die Bedienelemente als Listeneinträge einer Liste angeordnet.

Dies ermöglicht vorteilhafterweise eine Anzeige der Planungsobjekte innerhalb einer Liste, wobei durch ein Strukturieren der Liste eine besonders übersichtliche Darstellung erreicht werden kann. Ferner werden die Planungsobjekte auf diese Weise als Bedienelemente dargestellt, das heißt, sie werden durch grafische Objekte der Bedienoberfläche repräsentiert und eine Bedingung dieser Bedienobjekte dient der Auswahl und/oder Verwendung der zugeordneten Planungsobjekte.

Bei einer weiteren Ausgestaltung der Erfindung werden die Reiseplanergänzungsdaten anhand einer Bedienhandlung erfasst, wobei die Bedienhandlung eine Verschiebung eines Bedienelements innerhalb der Bedienoberfläche umfasst.

Beispielsweise kann ein Bedienelement verschoben werden, wobei insbesondere eine Wischgeste bei einer Bedienung mittels Touchscreen verwendet werden kann. Ein Bedienelement kann dabei räumlich innerhalb der Bedienoberfläche verändert werden, beispielsweise kann ein Bedienelement relativ zu einer Kartendarstellung oder einem grafischen Symbol, das der Fahrtroute zugeordnet ist, verändert werden. Dies kann eine besonders intuitive Bedienung ermöglichen, wenn etwa einem Zwischenziel, das einem Bedienelement zugeordnet ist, der Route hinzugefügt werden soll.

Bei einer Ausbildung werden Nutzerdaten erfasst, wobei anhand der Nutzerdaten zumindest ein vorgeschlagenes Planungsobjekt bestimmt wird und die Liste so erzeugt wird, dass ein Listeneintrag dem vorgeschlagenen Planungsobjekt zugeordnet ist.

Dabei können beispielsweise persönliche Präferenzen eines Nutzers erfasst werden und es können die in einer Liste dargestellten Planungsobjekte entsprechend diesen Nutzerdaten strukturiert werden. Beispielsweise kann anhand der erfassten Nutzerdaten ein Vorschlag für ein Planungsobjekt erzeugt werden. Beispielsweise kann automatisch ein in der Umgebung der Fahrtroute befindliches Restaurant ausgewählt werden, wobei insbesondere ein Typ von Zwischenzielen, beispielsweise Restaurants einer bestimmten regionalen Küche, bevorzugt vorgeschlagen werden können. Es kann auf diese Weise eine nutzerspezifische Auswahl von möglichen Planungsobjekten dargestellt werden.

Bei einer weiteren Ausbildung werden die Listeneinträge Kategorien zugeordnet und anhand dieser Kategorien angezeigt. Dies erlaubt eine sinnvolle Strukturierung und Ordnung der Listeneinträge, beispielsweise nach Kategorien wie "Restaurant", "Natur", "Entertainment" und/oder "Tankstellen".

Bei einer Weiterbildung ist zumindest eine Teilmenge der Listeneinträge der Liste Planungsobjekten mit geographischen Zielen zugeordnet, wobei die Listeneinträge der geographischen Ziele anhand eines Abstandes von der Fahrtroute und/oder einem geographischen Ort auf der Fahrtroute erzeugt werden. Dadurch kann vorteilhafterweise durch eine räumliche Bewertung sichergestellt werden, dass relevante geografische Ziele in der Liste angezeigt werden.

Beispielsweise können potenzielle Zwischenziele in Abhängigkeit von dem Abstand aufeinanderfolgend in der Liste angeordnet werden. Ferner kann eine Gruppierung vorgenommen werden, beispielsweise für geografische Ziele in bestimmten geografischen Bereichen. Ferner kann die Erzeugung anhand eines bestimmten oder manuell eingestellten Radius oder Abstands vorgenommen werden. Beispielsweise kann eine bestimmte Position entlang der Fahrtroute und ein Radius manuell eingestellt werden, wobei die resultierenden ausgewählten Listeneinträge geografischen Zielen in dem so definierten Bereich entsprechen.

Ferner kann anstelle des Abstandes eine zusätzliche Fahrzeit berücksichtigt werden. Dies ist insbesondere dann von Vorteil, wenn das Anfahren eines Zwischenziels eine zusätzliche Verlängerung der Fahrzeit bedeutet.

Bei einer Ausgestaltung werden für zumindest eine Teilmenge der Listeneinträge Bewertungsdaten erfasst und die Liste wird in Abhängigkeit von den Bewertungsdaten erzeugt, wobei insbesondere eine Fahrzeit berücksichtigt wird.

Die Bewertungsdaten können beispielsweise von einer Datenbank erfasst werden, beispielsweise über das Internet. Beim Erzeugen der Liste können zum Beispiel die Listeneinträge nach an sich bekannten Verfahren anhand der Bewertungsdaten in eine Reihenfolge gebracht werden, etwa um besonders gut bewertete oder beliebte Zwischenziele, beispielsweise Restaurants oder Sehenswürdigkeiten vor weniger Beliebten anzuzeigen. Ferner kann eine Hervorhebung bestimmter Listeneinträge erzeugt werden. Zudem können die Listeneinträge der Liste gruppiert werden anhand der Bewertungsdaten.

Bei einer weiteren Ausgestaltung wird die Bedienoberfläche mit der Liste so erzeugt, dass die Listeneinträge betätigbar sind und nach einer Betätigung eines Listeneintrags Daten über das zugeordnete Planungsobjekt erfasst und ausgegeben werden.

Dadurch können beispielsweise Zusatzdaten aufgerufen werden, indem ein Listeneintrag betätigt wird, etwa durch Auswählen. Dies kann insbesondere nach an sich bekannten Verfahren durch Aufrufen einer Internetseite oder einer durch das System generierten Anzeige mit Zusatzdaten erfolgen.

Gemäß einer weiteren Ausbildung ist zumindest eines der Nutzergeräte ein fahrzeugexternes Mobilgerät. Dadurch kann vorteilhafterweise eine Einbindung von Mobilgeräten in die Reiseplanung erreicht werden und Schritte der Reiseplanung können unabhängig vom Fahrzeug erfolgen. Insbesondere kann sich das fahrzeugexterne Mobilgerät im Fahrzeug befinden, wobei allerdings keine dauerhafte Verbindung mit dem Fahrzeug hergestellt wird. Das Mobilgerät kann beispielsweise ein Mobiltelefon, ein Tablet-Computer oder ein anderer tragbarer Computer sein.

Bei einer Weiterbildung sind die zumindest zwei Nutzergeräte wenigstens zeitweise über einen Server und/oder über eine direkte Verbindung datentechnisch mit dem Fahrzeug verbunden. Dadurch wird eine kooperative Reiseplanung ermöglicht. Insbesondere können Daten über den Reiseplan sowie Reiseplanänderungsdaten zwischen den Nutzergeräten übertragen werden. Ferner kann eine Übertragung von den weiteren Daten zur Kommunikation zwischen verschiedenen Teilnehmern erfolgen.

Bei einer Weiterbildung wird eine Position eines Nutzergeräts relativ zu dem Fahrzeug erfasst und es wird in Abhängigkeit von der Position eine datentechnische Verbindung zwischen dem Nutzergerät und dem Fahrzeug hergestellt.

Dadurch kann vorteilhafterweise situationsbezogen erkannt werden, ob das Nutzergerät mit dem Fahrzeug datentechnisch verbunden werden soll. Beispielsweise kann das Herstellen der datentechnischen Verbindung mit einem Einsteigen des Nutzers in das Fahrzeug oder mit einer Annäherung an das Fahrzeug verbunden werden. Es kann dabei auch ein Wechsel von Teilnehmergeräten durchgeführt werden. Beispielsweise kann der Fahrer des Fahrzeugs vor Reiseantritt durch ein Mobilgerät an der Planung beteiligt sein, und während der Fahrt eine Einrichtung des Fahrzeugs verwenden, beispielsweise das Mitteldisplay des Fahrzeugs am Armaturenbrett. Dabei kann die Rolle des Fahrergeräts von dem Mobilgerät des Fahrers auf die Einrichtung des Fahrzeugs übergehen.

Bei einer Ausbildung werden Reiseplanergänzungsdaten, die von einem der Teilnehmergeräte erfasst wurden, an ein anderes Teilnehmergerät übertragen und von dem anderen Teilnehmergerät angezeigt, wobei angezeigt wird, welches Planungsobjekt der Reisplanergänzungsdaten mit welchem Teilnehmergerät erfasst wurde.

Dadurch können vorteilhafterweise Änderungsvorschläge zwischen den Teilnehmergeräten mitgeteilt werden. Insbesondere können Vorschläge von Teilnehmergeräten durch andere Teilnehmergeräte angezeigt werden, wobei die Anzeige ferner Informationen über den Urheber des Vorschlags umfassen können.

Bei einer weiteren Ausbildung umfasst die Bedienoberfläche eine Anzeige mit Informationen darüber, von wie vielen Teilnehmergeräten ein bestimmtes Planungsobjekt der Reiseplanänderungsdaten erfasst wurde.

Es können also auch mehrere Teilnehmergeräte einen bestimmten Änderungswunsch erfassen, insbesondere kann das gleiche Planungsobjekt durch verschiedene Teilnehmergeräte dem Reiseplan hinzugefügt werden. In diesem Fall kann die Anzeige für die Teilnehmergeräte Informationen dazu umfassen, von wie vielen und gegebenenfalls von welchen Teilnehmergeräten ein Vorschlag gemacht wurde. Die Darstellung kann dabei beispielsweise durch Sortieren nach der Zahl der vorschlagenden Teilnehmergeräte erfolgen, sodass beispielsweise eine Beurteilung der Vorschläge anhand der Anzahl der Vorschläge durchgeführt werden kann, etwa nach Art einer Abstimmung. Insbesondere kann dadurch die Entscheidung zwischen alternativen Zwischenzielen oder Planungsobjekten erleichtert werden, beispielsweise wenn zwei verschiedene Restaurants vorgeschlagen wurden.

Bei einer weiteren Ausbildung umfasst die Bedienoberfläche eine Anzeige einer Teilnehmerliste, wobei die Teilnehmerliste anhand der Teilnehmergeräte erzeugt wird. Es kann dadurch erfasst werden, welche anderen Teilnehmergeräte und entsprechende teilnehmende Nutzer am Prozess der Reiseplanung beteiligt sind.

Bei einer Weiterbildung werden durch ein Teilnehmergerät Nachrichtendaten erfasst. Die Nachrichtendaten werden an zumindest ein anderes Teilnehmergerät übertragen und von dem anderen Teilnehmergerät ausgegeben. Dadurch kann vorteilhafterweise eine Kommunikation zwischen den Teilnehmergeräten bereitgestellt werden. Dies kann insbesondere nach Art eines Kurznachrichtendienstes oder Instant Messenger erfolgen.

Bei einer weiteren Ausgestaltung werden einem Teilnehmergerät Aufgabendaten zugeordnet und die Bedienoberfläche umfasst eine Aufgabenanzeige, wobei insbesondere Informationen über die Aufgabendaten und das zugeordnete Teilnehmergerät ausgegeben werden. Dadurch können vorteilhafterweise Aufgaben mittels der Bedienoberfläche verteilt werden.

Bei einer Reise können Aufgaben anfallen, welche die Teilnehmer der Reise typischerweise untereinander aufteilen möchten. Beispielsweise kann eine solche Aufgabe das Mitbringen eines Gegenstandes sein. Es können nun Aufgabendaten generiert werden, beispielsweise durch das Eingeben einer bestimmten Aufgabe. Anhand der Aufgabendaten wird eine Aufgabenanzeige erzeugt, beispielsweise durch Darstellung eines der Aufgabe zugeordneten Symbols. Dabei kann eine Zuordnung zu einem Teilnehmergerät vorgenommen werden, beispielsweise durch Zuordnung eines Symbols zu einem Eintrag einer Teilnehmerliste.

Bei einer Ausbildung des erfindungsgemäßen Verfahrens wird der Reiseplan gespeichert und es wird eine Reisetagebuchanforderung empfangen. Anhand der Reisetagebuchanforderung und des gespeicherten Reiseplans werden Reisetagebuchdaten erzeugt und ausgegeben, wobei die Reisetagebuchdaten die Fahrtroute und zumindest eine Teilmenge der Planungsobjekte des Reiseplans umfassen.

Dadurch kann vorteilhafterweise ein Reisetagebuch erstellt werden, welches nach Art eines Protokolls über die Reise zentrale Aspekte der Reise zusammenfasst.

Dabei erfolgt die Speicherung des Reiseplans flüchtig oder nicht flüchtig, insbesondere durch eine Speichervorrichtung des Fahrzeugs. Die Reisetagebuchanforderung kann manuell erzeugt werden, beispielsweise durch eine Nutzereingabe. Sie kann ferner automatisch erzeugt werden, beispielsweise kann am Ende einer Reise automatisch ein Reisetagebuch erzeugt werden. Insbesondere kann die Reisetagebuchanforderung Einstellungen für das Erzeugen des Reisetagebuchs umfassen, beispielsweise kann ausgewählt werden, welche Daten von dem Reisetagebuch umfasst sein sollen. Es wird eine Ausgabe der Reisetagebuchdaten erzeugt, wobei verschiedene Formate verwendet werden können. Beispielsweise kann das Reisetagebuch eine multimediale Präsentation der Reise umfassen. Das Reisetagebuch kann mittels einer Ausgabeeinrichtung des Fahrzeugs, beispielsweise mittels einer Multimediawiedergabeeinrichtung, erfolgen. Ferner kann beispielsweise ein Ausdrucken erfolgen oder es können digitale Daten des Reisetagebuchs an andere Einrichtungen im Fahrzeug oder außerhalb des Fahrzeugs übertragen werden.

Bei einer weiteren Ausbildung wird die Erzeugungsanforderung am Ende der Reise automatisch erzeugt. Die Reisetagebuchanforderung kann in diesem Fall beispielsweise durch ein Navigationsgerät des Fahrzeugs erzeugt werden, wenn erkannt wird, dass das Fahrzeug die Zielposition erreicht hat.

Bei einer weiteren Ausbildung umfassen die Reisetagebuchdaten eine Startposition, eine Zielposition, eine Zwischenposition, eine Reiseentfernung, ein Reisedatum, eine Reisedauer und/oder ein Sonderziel. Dadurch kann der Verlauf der Reise, insbesondere die Bewegung des Fahrzeugs, festgehalten werden.

Bei einer weiteren Ausbildung umfassen die Reisetagebuchdaten ferner einen Reisetitel, Teilnehmerdaten und/oder Bewertungsdaten.

Bei einer Weiterbildung werden während der Reise Stimmungs-Multimediadaten, insbesondere Bilddaten, gleichzeitig in einem Innenraum des Fahrzeugs und in einem Außenraum des Fahrzeugs erfasst und die Zusatzdaten umfassen die so erfassten Stimmungs-Multimediadaten. Dadurch kann nach Art eines Erinnerungsfotos ein Eindruck der Reise im Reisetagebuch gespeichert werden.

Bei einer weiteren Ausgestaltung umfassen die Reisetagebuchdaten Multimediainhalte und/oder Verknüpfungen zu Multimediainhalten. Insbesondere können dabei Multimediainhalte umfasst sein, die während der Reise erzeugt wurden. Beispielsweise können Bilddaten, Videodaten und/oder Audiodaten durch die Teilnehmergeräte erfasst werden und von den Reisetagebuchdaten umfasst sein. Ferner können Daten eines sozialen Netzwerks mit Bezug zu der Reise, beispielsweise mit Bezug zu einzelnen Multimediainhalten, umfasst sein. Ferner kann etwa eine Abspielliste mit Multimediainhalten umfasst sein.

Bei einer Weiterbildung umfassen die Reisetagebuchdaten eine Abspielliste für Multimediainhalte, wobei die Abspielliste Informationen über die Wiedergabe der Multimediainhalte während der Reise umfasst.

Insbesondere umfasst die Abspielliste Informationen über einen Speicherort. Sie kann ferner Daten zur Identifikation der Multimediainhalte umfassen, beispielsweise Interpret und Titel eines Musikstücks. Ferner kann ein Bild, beispielsweise ein Cover, umfasst sein. Ferner können Daten zu einem Speicherort beziehungsweise zu Abspielmöglichkeiten für einen Multimediainhalt umfasst sein.

Bei einer Ausbildung umfassend die Reisetagebuchdaten zumindest eine Verknüpfung zu Multimediainhalten, wobei der Verknüpfung eine Funktionalität zugeordnet ist.

Dadurch können vorteilhafterweise Informationen und funktionelle Eigenschaften in die Reisetagebuchdaten integriert werden, beispielsweise um ein Aufrufen weiterführender Informationen zu einem Multimediainhalt zu ermöglichen. Ferner kann beispielsweise nach Art eines Links eine Funktionalität aufgerufen werden. So kann beispielsweise für einen Multimediainhalt, für dessen Wiedergabe Rechte erworben werden müssen, eine Möglichkeit geschaffen werden, die Rechte zu erwerben. Beispielsweise kann durch den Link eine Internetseite eines Musikhandels aufgerufen werden.

Bei einer weiteren Ausbildung werden die Reisetagebuchdaten mittels eines Dateiformats gebildet, insbesondere ein Dokumentenformat, ein Multimediaformat oder ein Präsentationsformat.

Dadurch können vorteilhafterweise Daten als Reisetagebuchdaten ausgegeben werden und es kann eine Ausgabe der Reisetagebuchdaten durch verschiedene weitere Einrichtungen, beispielsweise durch ein Mobilgerät mit einem Betrachtungsprogramm für Präsentationen in einem bestimmten Format, ausgegeben werden.

Bei einer Weiterbildung werden die Reisetagebuchdaten durch eine Ausgabeeinheit des Fahrzeugs ausgegeben.

Dadurch kann beispielsweise ein Betrachten des Reisetagebuchs durch Nutzer des Fahrzeugs erfolgen. Insbesondere kann die Ausgabe durch die Ausgabeeinheit des Fahrzeugs direkt nach dem Erzeugen der Reisetagebuchdaten erfolgen. Ferner können die Reisetagebuchdaten gespeichert werden und zu einem beliebigen Zeitpunkt im Fahrzeug ausgegeben werden. Die Ausgabeeinheit kann dabei insbesondere eine Anzeigeeinheit des Fahrzeugs sein, beispielsweise ein Bildschirm, ferner können weitere Medienwiedergabeeinrichtungen verwendet werden.

Bei einer weiteren Ausbildung werden die Reisetagebuchdaten beim Ausgeben an ein Nutzergerät übertragen. Insbesondere kann das Nutzergerät ein Mobilgerät sein, beispielsweise ein Mobiltelefon, ein Tablet-Computer oder ein anderer tragbarer Computer des Nutzers. Ferner können die Reisetagebuchdaten an einen externen Server übertragen werden, beispielsweise zum Senden per E-Mail oder zum Veröffentlichen der Reisetagebuchdaten in einem sozialen Netzwerk oder auf einer anderen Internetseite. Dadurch kann vorteilhafterweise eine Anbindung an fahrzeugexterne Einrichtungen und Netzwerke erfolgen. Insbesondere kann der Nutzer die Reisetagebuchdaten mit weiteren Personen teilen.

Bei einer Weiterbildung wird ferner eine Nutzereingabe erfasst und die Reisetagebuchdaten werden anhand der Nutzereingabe aktualisiert. Anschließend werden die aktualisierten Reisetagebuchdaten ausgegeben. Dadurch können vorteilhafterweise die Reisetagebuchdaten bearbeitet werden.

Beispielsweise können die erzeugten Reisetagebuchdaten durch eine Aus- und Eingabevorrichtung des Fahrzeugs, etwa eine Infotainmenteinrichtung oder eine andere Multimediawiedergabeeinrichtung ausgegeben werden. Es kann eine Bedienoberfläche zur Verfügung gestellt werden, durch die Nutzereingaben besonders vorteilhaft erfolgen können.

Bei einer weiteren Ausbildung werden der Reiseplan und/oder die Reisetagebuchdaten nichtflüchtig gespeichert. Dadurch kann das Reisetagebuch zu einem späteren Zeitpunkt erstellt, bearbeitet oder ausgegeben werden. Beispielsweise können die Reisetagebuchdaten durch einen Server gespeichert werden und weiteren Nutzern zur Verfügung gestellt werden.

Das erfindungsgemäße System zum kooperativen Erzeugen und Verwalten eines Reiseplans umfasst ein Fahrzeug und zumindest zwei Nutzergeräte. Dabei umfasst das Fahrzeug ein Navigationssystem und eine Steuereinheit. Ferner umfassen die Nutzergeräte jeweils eine Ausgabeeinheit und eine Eingabeeinheit.

Das erfindungsgemäße System ist ausgebildet, das vorstehend beschriebene erfindungsgemäße Verfahren zu implementieren. Das System weist somit dieselben Vorteile auf wie das erfindungsgemäße Verfahren.

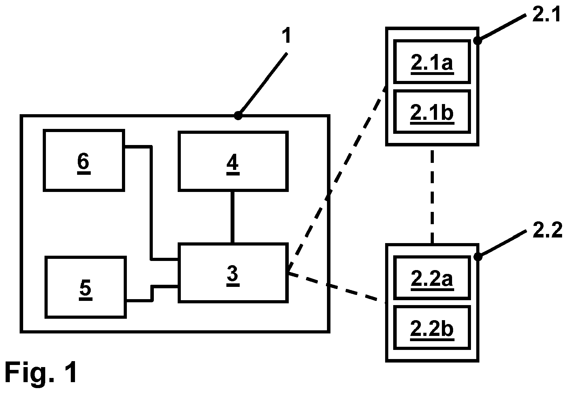

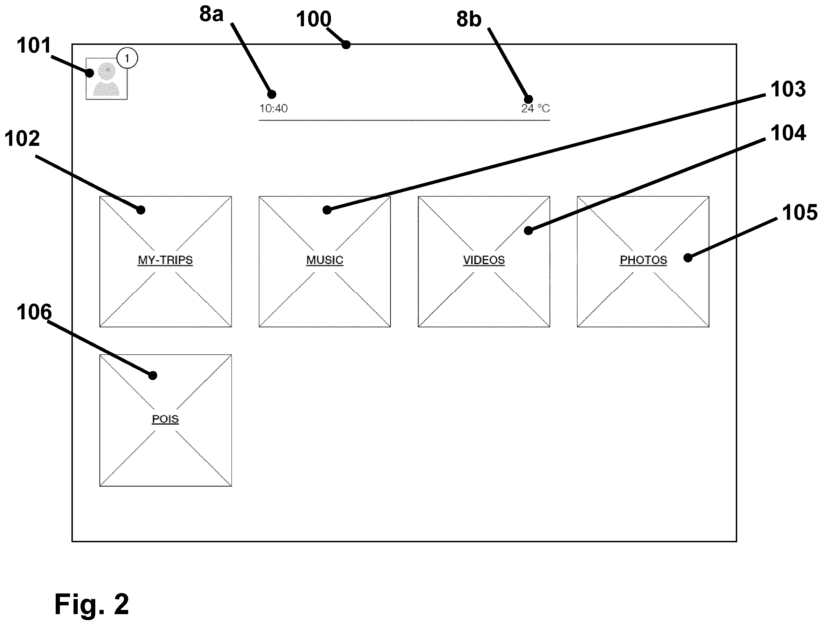

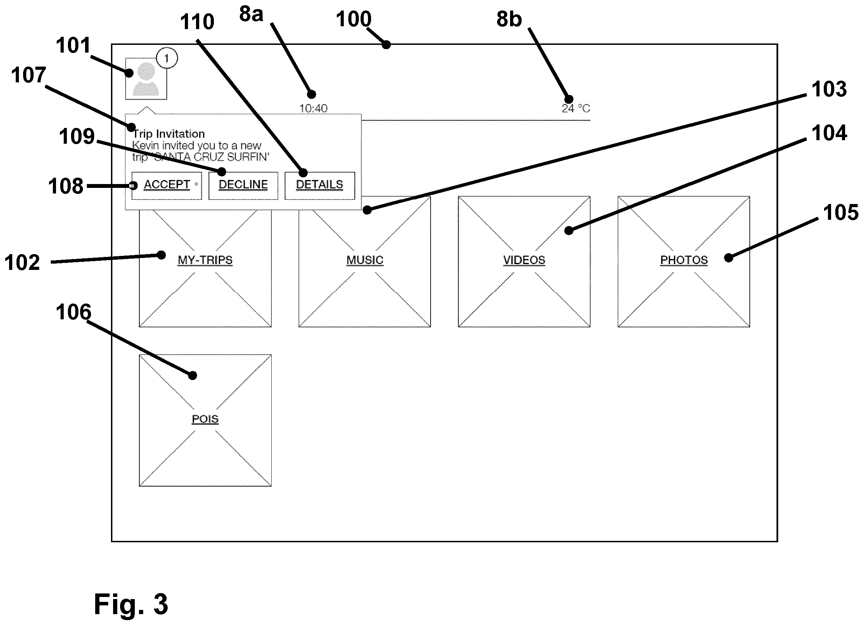

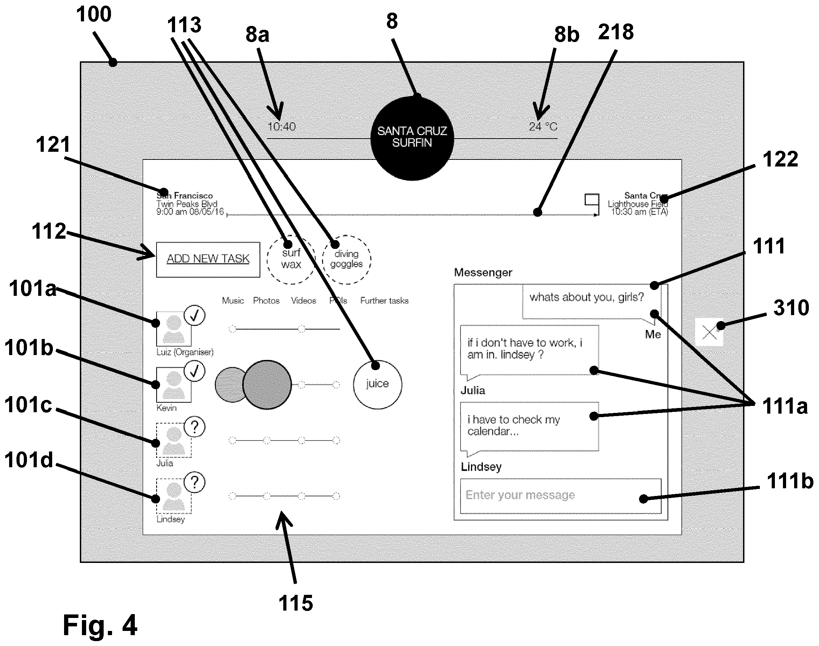

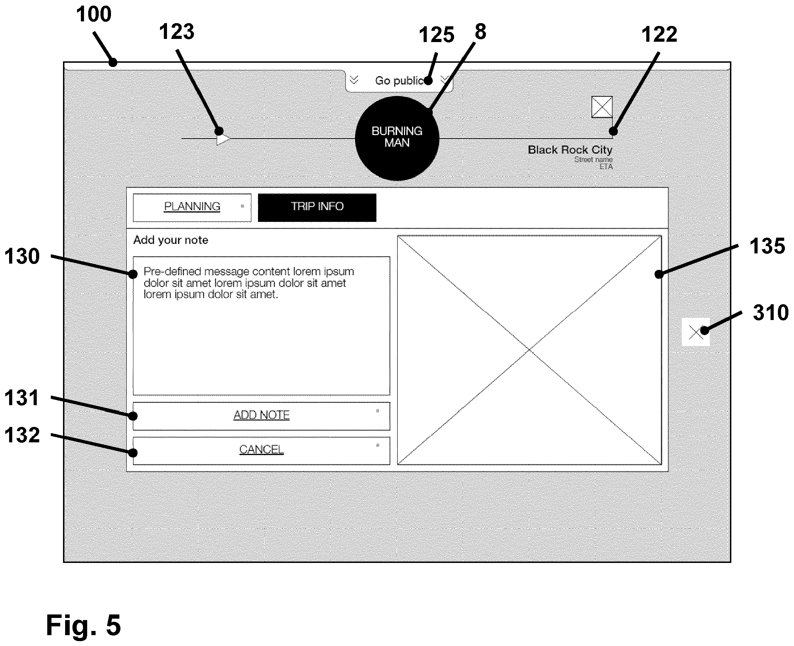

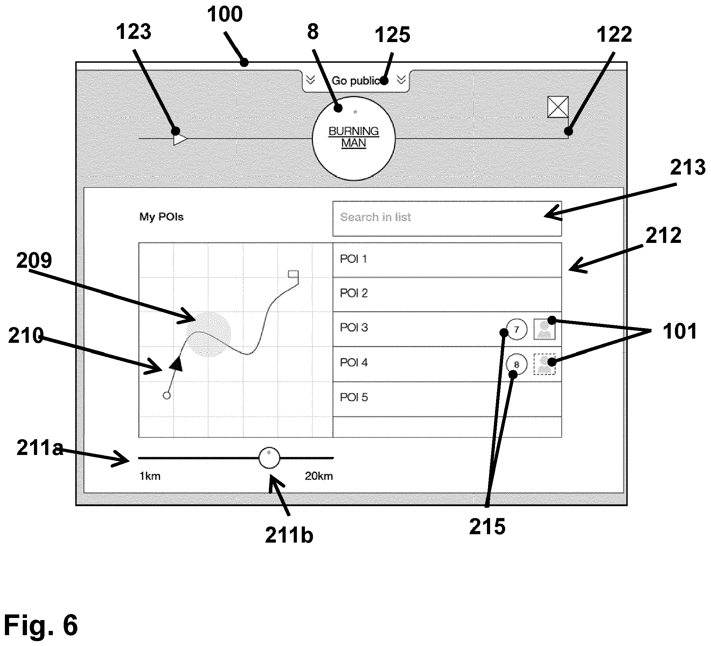

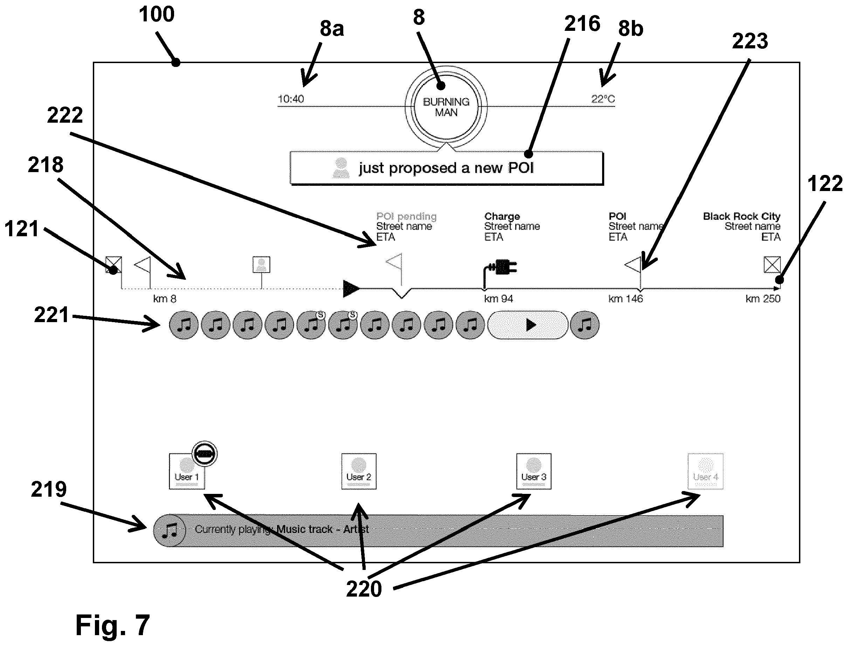

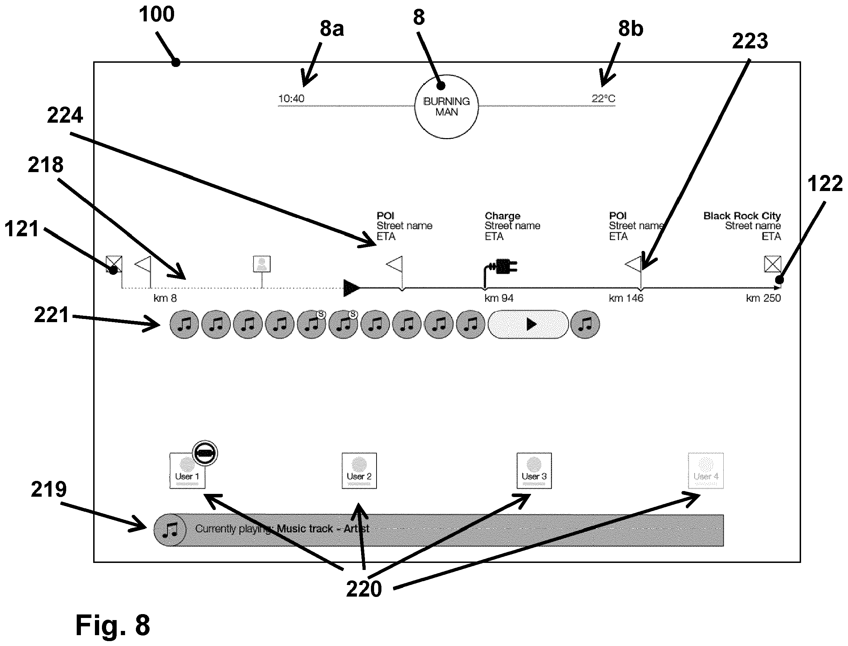

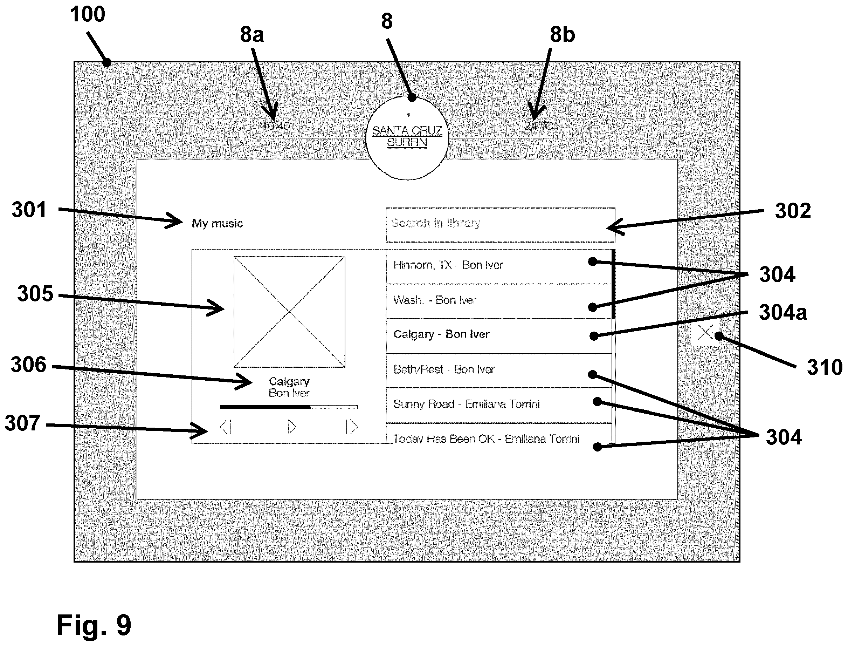

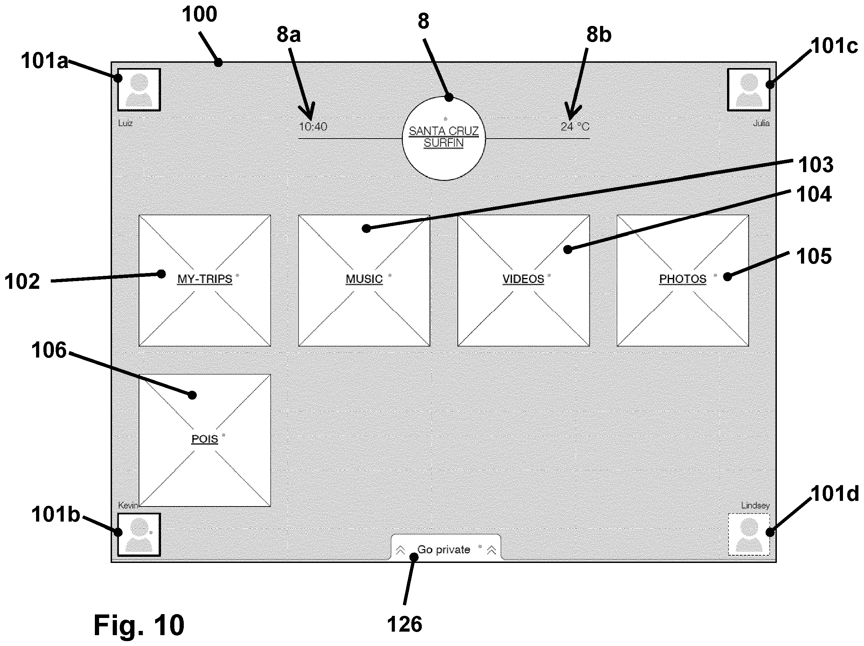

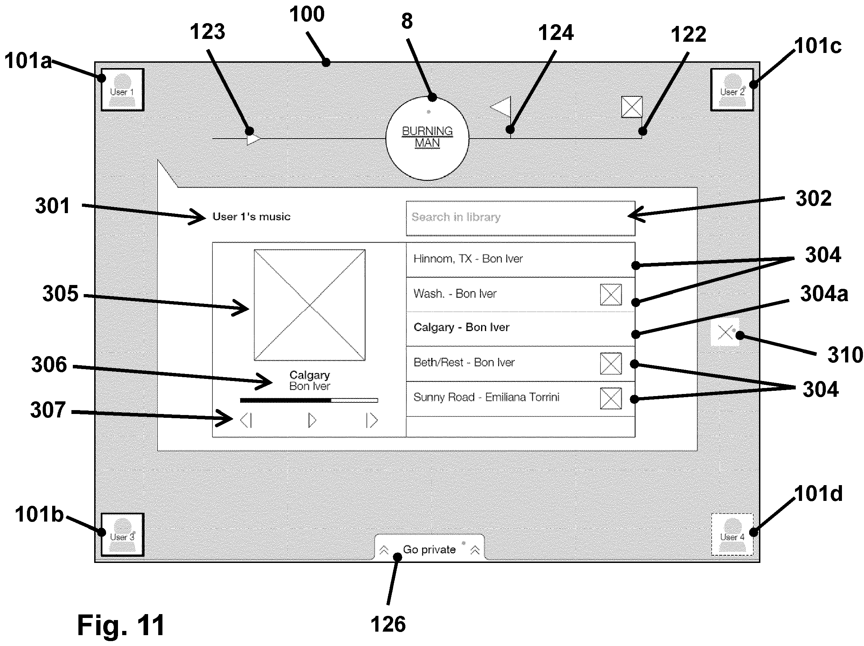

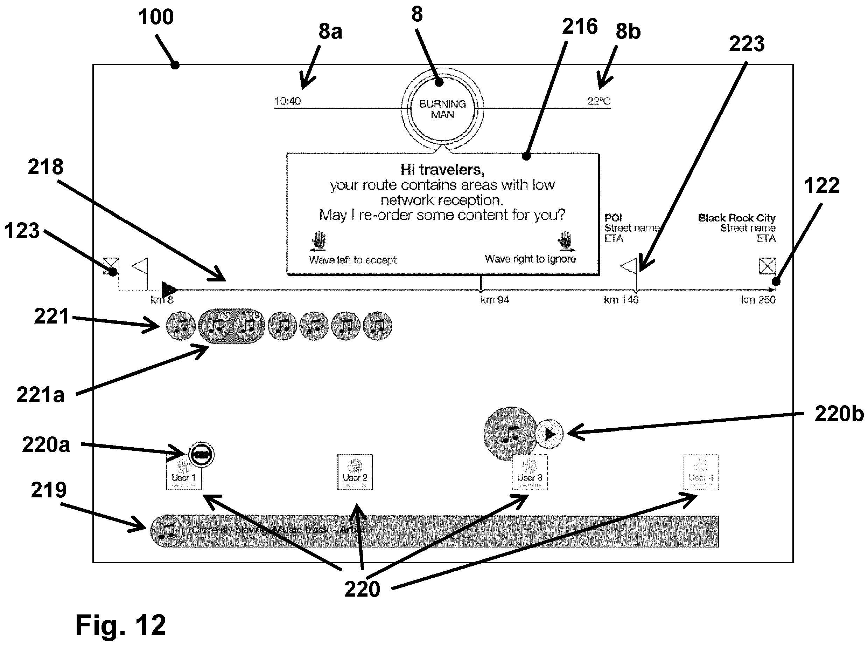

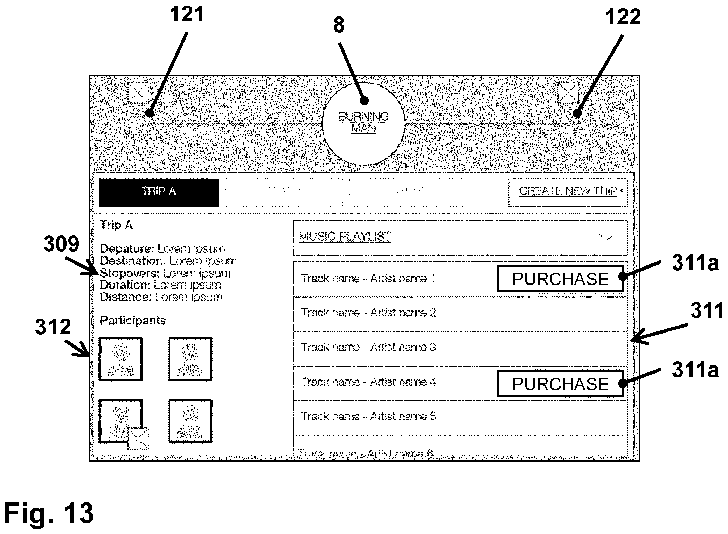

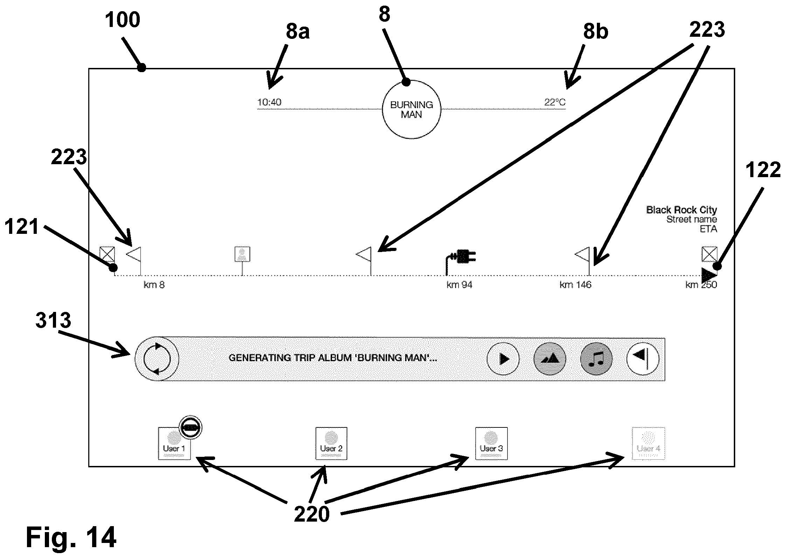

## Patentansprüche

1. Verfahren zum kooperativen Erzeugen und Verwalten eines Reiseplans für ein Fahrzeug (1) durch zumindest zwei Nutzergeräte (2.1, 2.2, 4), wobei
(a) durch ein erstes der zumindest zwei Nutzergeräte (2.1, 2.2, 4) eine Startposition und eine Zielposition erfasst wird und der Reiseplan erzeugt wird, wobei der Reiseplan zumindest eine Fahrtroute von der Startposition zur Zielposition sowie eine Liste von Planungsobjekten, die der Fahrtroute zugeordnet sind, umfasst,
(b) für alle weiteren der zumindest zwei Nutzergeräte (2.1, 2.2, 4) eine Teilnahmeanfrage erzeugt und an das jeweilige weitere Nutzergerät (2.1, 2.2, 4) übertragen wird, wobei durch das jeweilige weitere Nutzergerät (2.1, 2.2, 4) die Teilnahmeanfrage ausgegeben und eine Nutzereingabe als Annahme erfasst wird, wobei das erste Nutzergerät (2.1, 2.2, 4) und die weiteren Nutzergeräte (2.1, 2.2, 4), für die eine Annahme erfasst wurde, Teilnehmergeräte (2.1, 2.2, 4) sind,
(c) durch ein Teilnehmergerät (2.1, 2.2, 4) anhand des Reiseplans eine Anzeige (100) erzeugt und ausgegeben wird, wobei die Anzeige (100) eine Bedienoberfläche umfasst, und mittels einer Eingabeeinheit (2.1b, 2.2b, 4) des Teilnehmergeräts (2.1, 2.2, 4) Reiseplanergänzungsdaten erfasst werden, wobei der Fahrtroute zumindest ein weiteres Planungsobjekt zugeordnet wird oder ein der Fahrtroute zugeordnetes Planungsobjekt entfernt wird,
(d) Schritt (c) wiederholt wird, solange weitere Reiseplanergänzungsdaten erfasst werden, wobei die erfassten Reiseplanergänzungsdaten aktualisiert werden, und bis zum Veröffentlichen eines Vorschlags durch den Nutzer,
(e) anhand der erfassten Reiseplanergänzungsdaten der Reiseplan aktualisiert wird, wobei die Fahrtroute und/oder die Liste der Planungsobjekte neu erzeugt werden,
(f) anhand des aktualisierten Reiseplans ein Steuersignal erzeugt und zumindest an eine Navigationseinrichtung (6) des Fahrzeugs (1) übertragen wird und
(g) mit dem aktualisierten Reiseplan die Schritte (c) bis (f) wiederholt werden, solange in Schritt (c) und (d) weitere Reiseplanergänzungsdaten erfasst werden,
**dadurch gekennzeichnet, dass**
ein bestimmtes Teilnehmergerät (2.1, 2.2, 4) als Fahrergerät (2.1, 2.2, 4) betrieben wird und die anderen Teilnehmergeräte (2.1, 2.2, 4) als Mitfahrergeräte (2.1, 2.2, 4) betrieben werden,
anhand der Reiseplanergänzungsdaten eine Bestätigungsanfrage erzeugt und durch das Fahrergerät (2.1, 2.2, 4) ausgegeben wird,
durch das Fahrergerät (2.1, 2.2, 4) eine Annahme der Bestätigungsanfrage erfasst wird und
in Schritt (e) der Reiseplan in Abhängigkeit von der erfassten Annahme aktualisiert wird.

2. Verfahren gemäß Anspruch 1,
**dadurch gekennzeichnet, dass,**
die Reiseplanergänzungsdaten Planungsobjekte mit geographischen Zielen umfassen, wobei
beim Aktualisieren des Reiseplans anhand der Reiseplanergänzungsdaten die geographischen Ziele als Zwischenziele auf der Fahrtroute hinzugefügt werden.

3. Verfahren gemäß einem der vorhergehenden Ansprüche,
**dadurch gekennzeichnet, dass**
die Planungsobjekte Verknüpfungen zu Multimediainhalten umfassen.

4. Verfahren gemäß Anspruch 3,
**dadurch gekennzeichnet, dass,**
wenn die Liste von Planungsobjekten des Reiseplans Verknüpfungen zu Multimediainhalten umfasst, eine Abspielliste der Multimediainhalte für eine Medienwiedergabeeinrichtung (5) des Fahrzeugs (1) erzeugt wird.

5. Verfahren gemäß einem der vorhergehenden Ansprüche,
**dadurch gekennzeichnet, dass**
die Bedienoberfläche Bedienelemente umfasst, wobei jedem Bedienelement ein Planungsobjekt zugeordnet ist, und
die Bedienelemente als Listeneinträge (212, 304, 304a) einer Liste angeordnet sind.

6. Verfahren gemäß Anspruch 5,
**dadurch gekennzeichnet, dass**
zumindest eine Teilmenge der Listeneinträge (212, 304, 304a) der Liste Planungsobjekten mit geographischen Zielen zugeordnet ist, wobei die Listeneinträge (212, 304, 304a) der geographischen Ziele anhand eines Abstandes von der Fahrtroute und/oder einem geographischen Ort auf der Fahrtroute erzeugt werden.

7. Verfahren gemäß einem der vorhergehenden Ansprüche,
**dadurch gekennzeichnet, dass,**
Reiseplanergänzungsdaten, die von einem der Teilnehmergeräte (2.1, 2.2, 4) erfasst wurden, an ein anderes Teilnehmergerät (2.1, 2.2, 4) übertragen und von dem anderen Teilnehmergerät (2.1, 2.2, 4) angezeigt werden, wobei angezeigt wird, welches Planungsobjekt der Reisplanergänzungsdaten mit welchem Teilnehmergerät (2.1, 2.2, 4) erfasst wurde.

8. Verfahren gemäß einem der vorhergehenden Ansprüche,
**dadurch gekennzeichnet, dass**
durch ein Teilnehmergerät (2.1, 2.2, 4) Nachrichtendaten erfasst werden,
die Nachrichtendaten an zumindest ein anderes Teilnehmergerät (2.1, 2.2, 4) übertragen werden und
die Nachrichtendaten von dem anderen Teilnehmergerät (2.1, 2.2, 4) ausgegeben werden.

9. Verfahren gemäß einem der vorhergehenden Ansprüche,
**dadurch gekennzeichnet, dass**
einem Teilnehmergerät (2.1, 2.2, 4) Aufgabendaten zugeordnet werden und die Bedienoberfläche eine Aufgabenanzeige (113) umfasst, wobei insbesondere Informationen über die Aufgabendaten und das zugeordnete Teilnehmergerät (2.1, 2.2, 4) ausgegeben werden.

10. Verfahren gemäß einem der vorhergehenden Ansprüche,
**dadurch gekennzeichnet, dass**
der Reiseplan gespeichert wird,
eine Reisetagebuchanforderung empfangen wird und
anhand der Reisetagebuchanforderung und des gespeicherten Reiseplans Reisetagebuchdaten erzeugt und ausgegeben werden, wobei
die Reisetagebuchdaten die Fahrtroute und zumindest eine Teilmenge der Planungsobjekte des Reiseplans umfassen.

11. Verfahren gemäß Anspruch 10,
**dadurch gekennzeichnet, dass**
die Reisetagebuchdaten zumindest eine Verknüpfung zu Multimediainhalten (311) umfassen, wobei der Verknüpfung eine Funktionalität (311a) zugeordnet ist.

12. Verfahren gemäß Anspruch 10 oder 11,
**dadurch gekennzeichnet, dass**
die Reisetagebuchdaten beim Ausgeben an ein Nutzergerät (2.1, 2.2, 4) übertragen werden.

13. Verfahren gemäß einem der Ansprüche 10 bis 12,
**dadurch gekennzeichnet, dass**
ferner eine Nutzereingabe erfasst wird,
die Reisetagebuchdaten anhand der Nutzereingabe aktualisiert werden und
die aktualisierten Reisetagebuchdaten ausgegeben werden.

14. System zum kooperativen Erzeugen und Verwalten eines Reiseplans, wobei das System ein Fahrzeug (1) und zumindest zwei Nutzergeräte (2.1, 2.2, 4) umfasst, wobei
das Fahrzeug (1) ein Navigationssystem (6) und eine Steuereinheit (3) umfasst;
die Nutzergeräte (2.1, 2.2, 4) jeweils eine Ausgabeeinheit (2.1a, 2.2a, 4) und eine Eingabeeinheit (2.1b, 2.2b, 4) umfassen; wobei das System ausgebildet ist, das Verfahren nach einem der Ansprüche 1 bis 13 zu implementieren.

15. System gemäß Anspruch 14,
**dadurch gekennzeichnet, dass**
der Reiseplan speicherbar ist,
durch eine Erfassungseinheit eine Reisetagebuchanforderung empfangbar ist und anhand der Reisetagebuchanforderung und des gespeicherten Reiseplans Reisetagebuchdaten erzeugbar und ausgebbar sind, wobei
die Reisetagebuchdaten die Fahrtroute und zumindest eine Teilmenge der Planungsobjekte des Reiseplans umfassen.

## Claims

1. Method for cooperatively generating and managing a travel plan for a vehicle (1) by means of at least two user devices (2.1, 2.2, 4), wherein
(a) a starting position and a destination position are sensed by a first of the at least two user devices (2.1, 2.2, 4) and the travel plan is generated, wherein the travel plan comprises at least one route from the starting position to the destination position and a list of planning objects which are assigned to the route,
(b) a participant enquiry is generated for all the further of the at least two user devices (2.1, 2.2, 4) and transmitted to the respective further user device (2.1, 2.2, 4), wherein the participant enquiry is outputted by the respective further user device (2.1, 2.2, 4) and a user input is sensed as an acceptance, wherein the first user device (2.1, 2.2, 4) and the further user devices (2.1, 2.2, 4), for which an acceptance has been sensed, are participant devices (2.1, 2.2, 4),
(c) a display (100) is generated and outputted by a participant device (2.1, 2.2, 4) on the basis of the travel plan, wherein the display (100) comprises a user interface, and travel plan supplementary data are acquired by means of an input unit (2.1b, 2.2b, 4) of the participant device (2.1, 2.2, 4), wherein the route is assigned at least one further planning object or a planning object assigned to the route is removed,
(d) step (c) is repeated for as long as further travel plan supplementary data are acquired, wherein the acquired travel plan supplementary data are updated, and until publication of a proposal by the user,
(e) the travel plan is updated on the basis of the acquired travel plan supplementary data, wherein the route and/or the list of the planning objects are newly generated,
(f) a control signal is generated on the basis of the updated travel plan and transmitted at least to a navigation device (6) of the vehicle (1) and
(g) steps (c) to (f) are repeated with the updated travel plan as long as further travel plan supplementary data are acquired in step (c) and (d),
**characterized in that**
a specific participant device (2.1, 2.2, 4) is operated as a driver device (2.1, 2.2, 4) and the other participant devices (2.1, 2.2, 4) are operated as passenger devices (2.1, 2.2, 4),
on the basis of the travel plan supplementary data, a confirmation enquiry is generated and outputted by the driver device (2.1, 2.2, 4),
an acceptance of the confirmation enquiry is sensed by the driver device (2.1, 2.2, 4) and
in step (e) the travel plan is updated subject to the sensed acceptance.

2. Method according to Claim 1,
**characterized in that**
the travel plan supplementary data comprise planning objects with geographical destinations, wherein
the geographical destinations are added as intermediate destinations on the route during the updating of the travel plan on the basis of the travel plan supplementary data.

3. Method according to either of the preceding claims, **characterized in that**
the planning objects comprise links to multimedia contents.

4. Method according to Claim 3,
**characterized in that,**
if the list of planning objects of the travel plan comprises links to multimedia contents, a playlist of the multimedia contents is generated for a media reproduction device (5) of the vehicle (1).

5. Method according to one of the preceding claims, **characterized in that**
the user interface comprises user elements, wherein a planning object is assigned to each user element, and the user elements are arranged as list entries (212, 304, 304a) of a list.

6. Method according to Claim 5,
**characterized in that**
at least a partial number of the list entries (212, 304, 304a) of the list is assigned to planning objects with geographical destinations, wherein the list entries (212, 304, 304a) of the geographical destinations are generated on the basis of a distance from the route and/or a geographical location on the route.

7. Method according to one of the preceding claims,
**characterized in that**
travel plan supplementary data, which have been acquired from one of the participant devices (2.1, 2.2, 4), are transmitted to another participant device (2.1, 2.2, 4) and displayed by the other participant device (2.1, 2.2, 4), wherein it is indicated which planning object of the travel plan supplementary data has been sensed by which participant device (2.1, 2.2, 4).

8. Method according to one of the preceding claims,
**characterized in that**
message data are acquired via a participant device (2.1, 2.2, 4),
the message data are transmitted to at least one other participant device (2.1, 2.2, 4) and
the message data are outputted by the other participant device (2.1, 2.2, 4).

9. Method according to one of the preceding claims,
**characterized in that**
task data are assigned to a participant device (2.1, 2.2, 4) and the user interface comprises a task display (113), wherein in particular information concerning the task data and the assigned participant device (2.1, 2.2, 4) are outputted.

10. Method according to one of the preceding claims,
**characterized in that**
the travel plan is stored,
a travel diary request is received and,
on the basis of the travel diary request and the stored travel plan, travel diary data are generated and outputted, wherein
the travel diary data comprise the route and at least a partial number of the planning objects of the travel plan.

11. Method according to Claim 10,
**characterized in that**
the travel diary data comprise at least one link to multimedia contents (311), wherein a functionality (311a) is assigned to the link.

12. Method according to Claim 10 or 11,
**characterized in that**
the travel diary data upon being outputted are transmitted to a user device (2.1, 2.2, 4).

13. Method according to one of Claims 10 to 12,
**characterized in that**
a user input is also sensed,
the travel diary data are updated on the basis of the user input and
the updated travel diary data are outputted.

14. System for cooperatively generating and managing a travel plan, wherein the system comprises a vehicle (1) and at least two user devices (2.1, 2.2, 4), wherein the vehicle (1) comprises a navigation system (6) and a control unit (3);
the user devices (2.1, 2.2, 4) each comprise an output unit (2.1a, 2.2a, 4) and an input unit (2.1b, 2.2b, 4); wherein the system is designed to implement the method according to one of Claims 1 to 13.

15. System according to Claim 14,
**characterized in that**
the travel plan can be stored,
a travel diary request can be received by a sensing unit and
travel diary data can be generated and outputted on the basis of the travel diary request and the stored travel plan, wherein
the travel diary data comprise the route and at least a partial number of the planning objects of the travel plan.

## Revendications

1. Procédé de génération et de gestion coopératives d'un plan de voyage pour un véhicule (1) par au moins deux appareils utilisateur (2.1, 2.2, 4), dans lequel
(a) un premier des au moins deux appareils utilisateur (2.1, 2.2, 4) détecte une position de départ et une position d'arrivée et génère le plan de voyage, le plan de voyage comprenant au moins un itinéraire routier de la position de départ à la position d'arrivée ainsi qu'une liste d'objets de planification associés à l'itinéraire routier,
(b) pour tous les autres des au moins deux appareils utilisateur (2.1, 2.2, 4), une demande de participation est générée et transmise à l'autre appareil utilisateur (2.1, 2.2, 4) respectif, l'autre appareil utilisateur (2.1, 2.2, 4) respectif sortant la demande de participation et détectant une entrée utilisateur comme une acceptation, le premier appareil utilisateur (2.1, 2.2, 4) et les autres appareils utilisateur (2.1, 2.2, 4), pour lesquels une acceptation a été détectée, étant des appareils participants (2.1, 2.2, 4),
(c) un appareil participant (2.1, 2.2, 4) générant et sortant un affichage (100) à l'aide du plan de voyage, l'affichage (100) comprenant une interface utilisateur, et au moins une unité d'entrée (2.1b, 2.2b, 4) de l'appareil participant (2.1, 2.2, 4) détectant des données de plan de voyage complémentaires, l'itinéraire routier étant associé au moins à un autre objet de planification, ou un objet de planification associé à l'itinéraire routier étant retiré,
(d) l'étape (c) est répétée tant que d'autres données de plan de voyage complémentaires sont détectées, les données de plan de voyage complémentaires détectées étant mises à jour, et jusqu'à la publication d'une proposition par l'utilisateur,
(e) à l'aide des données de plan de voyage complémentaires détectées, le plan de voyage est mis à jour, l'itinéraire routier et/ou la liste des objets de planification sont générés à nouveau,
(f) à l'aide du plan de voyage mis à jour, un signal de commande est généré, et est au moins transmis à un dispositif de navigation (6) du véhicule (1), et
(g) les étapes (c) à (f) sont répétées avec le plan de voyage mis à jour tant qu'aux étapes (c) et (d) d'autres données de plan de voyage complémentaires sont détectées,
**caractérisé en ce que**
un appareil participant déterminé (2.1, 2.2, 4) est exploité comme appareil de conducteur (2.1, 2.2, 4) et les autres appareils participants (2.1, 2.2, 4) sont exploités comme appareils de passager (2.1, 2.2, 4), une demande de confirmation est générée à l'aide des données de plan de voyage complémentaires et sortie par l'appareil de conducteur (2.1, 2.2, 4),
l'appareil de conducteur (2.1, 2.2, 4) détecte une acceptation de la demande de confirmation, et
à l'étape (e), le plan de voyage est mis à jour en fonction de l'acceptation détectée.

2. Procédé selon la revendication 1, **caractérisé en ce que**
les données de plan de voyage complémentaires comprennent des objets de planification avec des destinations géographiques, dans lequel
lors de la mise à jour du plan de voyage à l'aide des données de plan de voyage complémentaires, les destinations géographiques sont ajoutées à l'itinéraire routier en tant que destinations intermédiaires.

3. Procédé selon l'une quelconque des revendications précédentes, **caractérisé en ce que** les objets de planification comprennent des liens vers des contenus multimédia.

4. Procédé selon la revendication 3, **caractérisé en ce que**, si la liste d'objets de planification du plan de voyage comprend des liens vers des contenus multimédia, une liste de lecture des contenus multimédia est générée pour un lecteur de média (5) du véhicule (1).

5. Procédé selon l'une quelconque des revendications précédentes, **caractérisé en ce que**
l'interface utilisateur comprend des éléments de commande, chaque élément de commande étant associé à un objet de planification, et
les éléments de commande étant disposés sous la forme des éléments de liste (212, 304, 304a) d'une liste.

6. Procédé selon la revendication 5, **caractérisé en ce qu'**au moins un sous-ensemble des éléments de liste (212, 304, 304a) de la liste est associé à des objets de planification avec des destinations géographiques, les éléments de liste (212, 304, 304a) des destinations géographiques étant générés à l'aide d'une distance par rapport à l'itinéraire routier et/ou à un lieu géographique sur l'itinéraire routier.

7. Procédé selon l'une quelconque des revendications précédentes, **caractérisé en ce que** des données de plan de voyage complémentaires qui ont été détectées par l'un des appareils participants (2.1, 2.2, 4) sont transmises à un autre appareil participant (2.1, 2.2, 4) et sont affichées par l'autre appareil participant (2.1, 2.2, 4), l'affichage indiquant quel objet de planification des données de plan de voyage complémentaires a été détecté avec quel appareil participant (2.1, 2.2, 4).

8. Procédé selon l'une quelconque des revendications précédentes, **caractérisé en ce que**
un appareil participant (2.1, 2.2, 4) détecte des données de message,
les données de message sont transmises à au moins un autre appareil participant (2.1, 2.2, 4), et
les données de message sont sorties par l'autre appareil participant (2.1, 2.2, 4).

9. Procédé selon l'une quelconque des revendications précédentes, **caractérisé en ce qu'**un appareil participant (2.1, 2.2, 4) est associé à des données de mission et l'interface utilisateur comprend un affichage de mission (113), dans lequel en particulier des informations concernant les données de mission et l'appareil participant associé (2.1, 2.2, 4) sont sorties.

10. Procédé selon l'une quelconque des revendications précédentes, **caractérisé en ce que**
le plan de voyage est stocké,
une demande de journal de plan de voyage est reçue, et à l'aide de la demande de journal de plan de voyage et du plan de voyage stocké, des données de journal de voyage sont générées et sorties, dans lequel
les données de journal de voyage comprennent l'itinéraire routier et au moins un sous-ensemble des objets de planification du plan de voyage.

11. Procédé selon la revendication 10, **caractérisé en ce que** les données de journal de voyage comprennent au moins un lien vers des contenus multimédia (311), le lien étant associé à une fonctionnalité (311a).

12. Procédé selon la revendication 10 ou 11, **caractérisé en ce que** les données de journal de voyage sont transmises à un appareil utilisateur (2.1, 2.2, 4) lorsqu'elles sont sorties.

13. Procédé selon l'une quelconque des revendications 10 à 12, **caractérisé en ce que**
en outre une entrée utilisateur est détectée,
les données de journal de voyage sont mises à jour à l'aide de l'entrée utilisateur, et
les données de journal de voyage mises à jour sont sorties.

14. Système de génération et de gestion coopératives d'un plan de voyage, le système comprenant un véhicule (1) et au moins deux appareils utilisateur (2.1, 2.2, 4), dans lequel
le véhicule (1) comprend un système de navigation (6) et une unité de commande (3) ;
les appareils utilisateur (2.1, 2.2, 4) comprennent respectivement une unité de sortie (2.1a, 2.2a, 4) et une unité d'entrée (2.1b, 2.2b, 4) ;
le système étant réalisé pour mettre en œuvre le procédé selon l'une quelconque des revendications 1 à 13.

15. Système selon la revendication 14, **caractérisé en ce que**
le plan de voyage peut être stocké,
une unité de détection peut recevoir une demande de journal de voyage, et
des données de journal de voyage peuvent être générées et sorties à l'aide de la demande de journal de voyage et du plan de voyage stocké, dans lequel
les données de journal de voyage comprennent l'itinéraire routier et au moins un sous-ensemble des objets de planification du plan de voyage.
